# EUROPEAN PATENT APPLICATION

(11) **EP 2 660 144 A1**
(43) Date of publication of application: **06.11.2013**
(21) Application number: 12305483.5
(22) Date of filing: 30.04.2012
(51) Int. Cl.: B64C 11/26, F01D 5/28

(54) **Propeller blade with modified spar stiffness.**

(71) Applicant: Hamilton Sundstrand Corporation, Windsor Locks, CT 06096-1010 (US); RATIER-FIGEAC, 46100 Figeac (FR)
(72) Inventor: P. Nagle, David, Westfield, MA Massachusetts 01085 (US); Brion, Patrice, 46100 Lunan (FR); Petallaz, Bruno, 46100 Béduer (FR)
(74) Representative: Leckey, David Herbert

(57) **Abstract**

A propeller blade (200) includes a foam core (204), a structural layer (206) formed of multiple layers that surrounds at least a portion of the foam core (204) and at least one section of fibers (230;240) formed separately from the structural layer (206) located between two of the multiple layers.

## Description

### BACKGROUND OF THE INVENTION

The present invention relates to propellers and, in particular, to propeller blades formed having a foam spar core.

Modem propeller blades typically include root portions which extend into the hub arm of the hub of the propeller system and which are secured to and rotatable relative to the hub arm via a retention assembly. Typically the retention assembly includes one or a plurality of ball bearing assemblies which permit the rotation of the blade in the hub arm for accomplishing pitch change of the blade for altering the speed of the propeller and accordingly, the aircraft.

The blades are typically formed by surrounding a foam spar core with a resin impregnated fabric. Leading and trailing edges of the blade are then formed over the fabric and surrounded by, for example, a Kevlar sock. Such blades are light and effective for their intended purposes.

### BRIEF DESCRIPTION OF THE INVENTION

According to one embodiment, a propeller blade that includes a foam core and a structural layer formed of multiple layers that surrounds at least a portion of the foam core is disclosed. The propeller blade of this embodiment further includes at least one section of fibers formed separately from the structural layer located between two of the multiple layers.

According to another embodiment, a method of forming a propeller blade includes forming a foam core; disposing a first layer of a structural layer over at least a portion of the foam core; disposing a fabric sheet including directionally oriented fibers over the first layer; and disposing a second layer of the structural layer of the fabric sheet and the first layer.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a plan-view of a prior art propeller blade;
FIG. 2 is a cross-section of the propeller blade shown in FIG. 1;
FIG. 3 is cross-section of a propeller blade according to one embodiment of the present invention; and
FIG. 4 is a plan view a propeller blade according to one embodiment of the present invention.

### DETAILED DESCRIPTION OF THE INVENTION

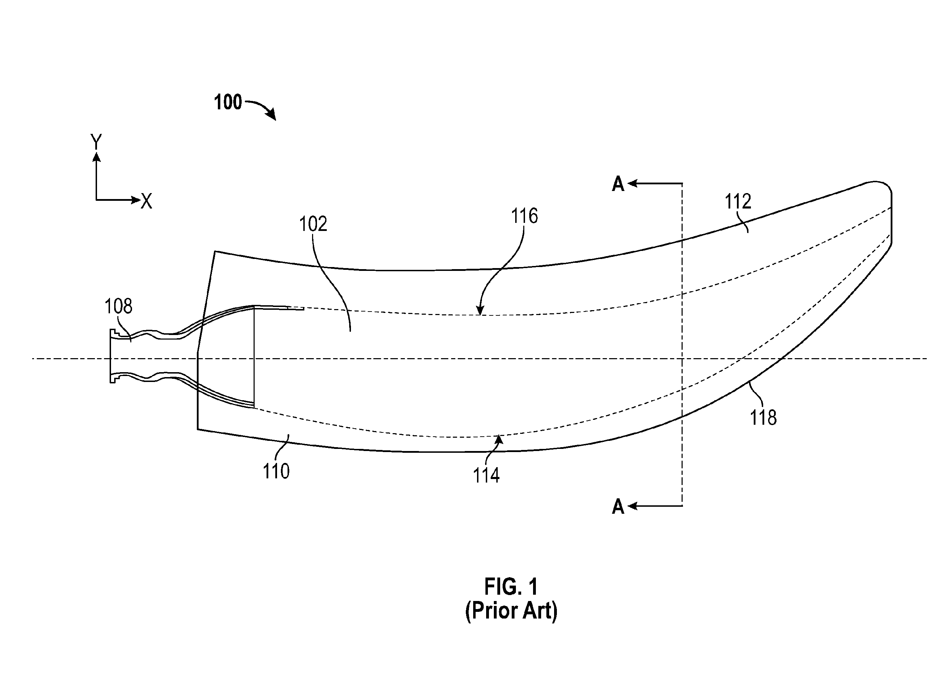

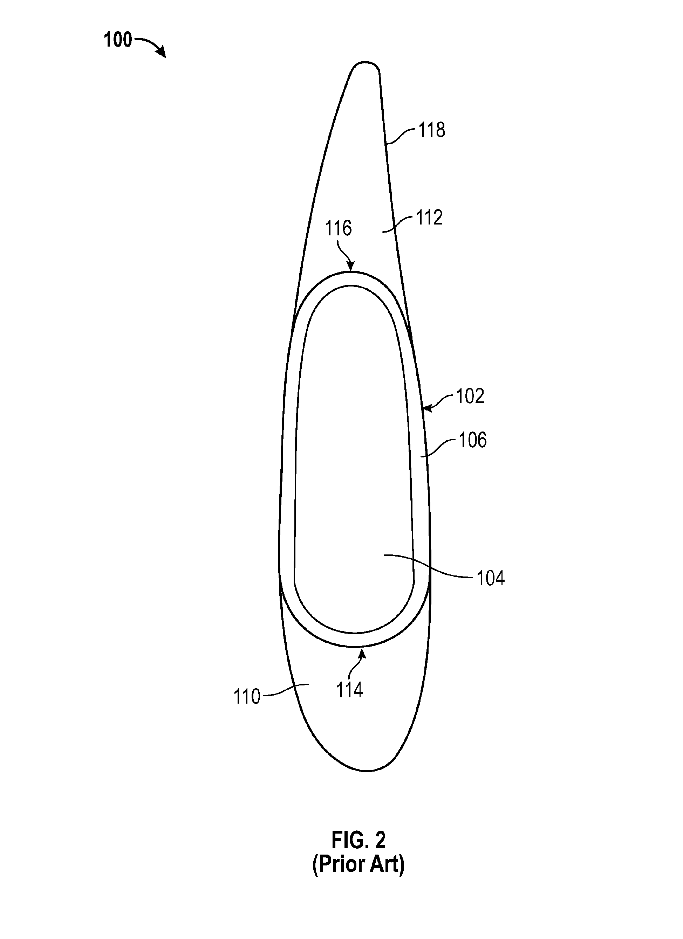

Referring now to FIG. 1, a plan view of a conventional propeller blade 100 is illustrated and will be used to define certain terms, explain how a propeller blade is generally made, and to illustrate the differences between embodiments of the present invention and the prior art. Reference will also be made to FIG. 2, which is a cross-section of the propeller blade 100 of FIG. 1 taken along line A-A, for these purposes.

The blade 100 is formed by first forming a spar 102. The spar 102 includes a spar foam core 104 surrounded by a structural layer 106. The core 104 is typically formed of a foam material that is injected into a mold. The mold can include a layer of fiberglass on the walls thereof that to which the foam of the core 104 adheres. As such, the core 104 can be surrounded by a layer of fiberglass (not shown).

The structural layer 106 is typically formed of a dry braided carbon fiber which is subsequently resin injected, or a resin-impregnated fabric material (e.g. resin impregnated carbon fabric) and disposed such that it surrounds the core 104 (and the fiberglass layer if it is included). The structural layer 106 is typically braided onto the core 104. In some cases, the spar 102 is heated to set the resin in the structural layer 106. Considerable thermal stresses can occur in the core 104 as the spar 102 is cooled due to the differences in the coefficients of thermal expansion (CTE) of the core 104 and the structural layer 106.

In some instances, the spar 102 is formed such that a portion of it is surrounded by a root portion 108 that allows the blade 100 to be connected to a hub (not shown). Rotation of the hub causes the blade 100 to rotate and, consequently, causes the generation of thrust to propel an aircraft. In the following discussion, it shall be assumed that the blade 100 rotates in the clockwise direction. The root portion 108 is sometimes referred to as a "tulip" in the industry and is typically formed of a metal.

After the spar 102 is formed, leading edge foam 110 and trailing edge foam 112 are formed on the leading and trailing edges 114, 116, respectively of the spar 102. The leading edge foam 110, trailing edge foam 112 and the spar 102 can then be encased in an outer layer 118. The outer layer 118 can be formed of Kevlar and be in the form of a sock that is pulled over the assembly that includes the leading edge foam 110, trailing edge foam 112 and the spar 102. Of course, the outer layer 118 could be formed in other manners as well.

As described above, considerable thermal stresses can occur in the core 104 as the spar 102 is cooled due to the differences in the coefficients of thermal expansion (CTE) of the core 104 and the structural layer 106. In addition, thermal stresses can be created between the core 104 and the structural layer 106 due to the wide range of temperatures experienced by the propeller blade 100 in normal operation.

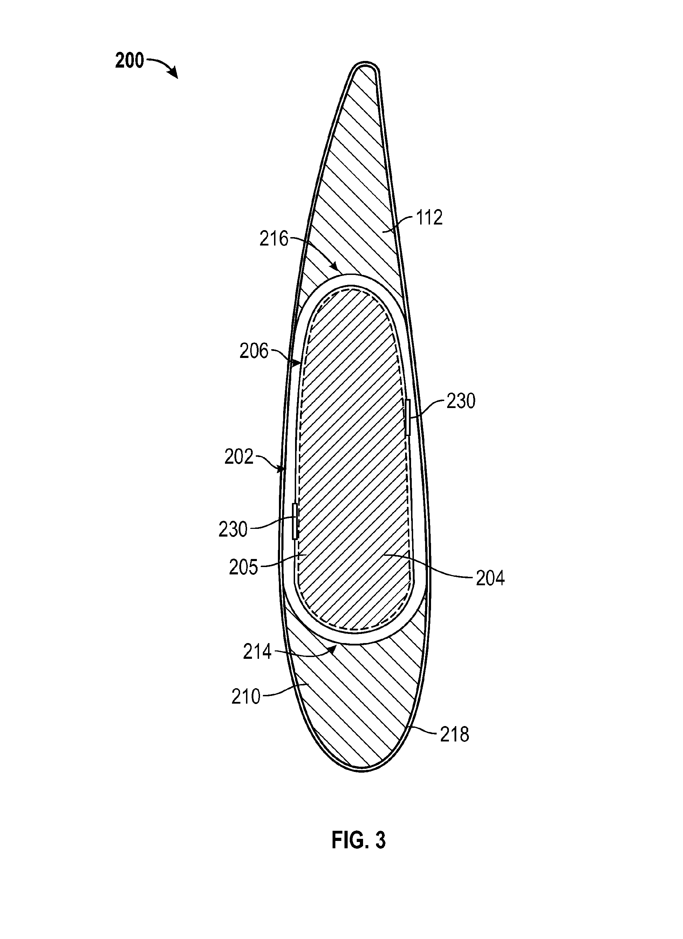

FIG. 3 illustrates a cut-away side view of a propeller blade 200 according to one embodiment of the present invention. The blade 200 is formed by first forming a spar 202. The spar 202 includes a spar foam core 204. The core 204 is typically formed of a foam material that is injected into a mold and can optionally be surrounded by a layer of fiberglass (not shown) in the same manner as described above. Examples of suitable foams that can be used to form the core 204 include polyurethane foam, polyisocyanurate foam, or polymethacrylimide.

In one embodiment, an optional adhesive layer 205 is formed on the outside of the core 204. The adhesive layer 205 is formed of an elastomeric or other high strain rate adhesive material. Examples of suitable adhesives include polyurethane adhesive and polysulfide adhesive.

A structural layer 206 can then be formed around the adhesive layer 205. In one embodiment, the structural layer 206 is formed of a resin-impregnated fiber material, such as a resin-impregnated braided carbon sheet, and disposed such that it surrounds the core 204 (and the fiberglass layer if present). The structural layer 206 is formed by a plurality of layers that are separately braided on. For instance, a braiding machine can be used to wrap resin coated fibers around the spar from the one end thereof to the other in the span wise direction X (or the opposite direction) shown in FIG. 1. Upon reaching the end of the spar 201, the braiding can then be repeated again in the same manner.

In operation, the blade 200 can be a high-performance propeller blade that is relatively long in the span wise direction X as compared to its thickness. As such, the spar is stiff in the span wise direction X for optimum blade frequency placement and, as such is quite flexible in the chord wise Y direction. According to one embodiment of the present invention, one or more patches of span wise fibers 230 are introduced between the layers of braiding forming the structural layer 206. The span wise fibers 230 can be contained in fabric sheets that include a plurality of fibers. In one embodiment, the span wise fibers 230 can be located such they result in a balanced spar. The span wise fibers 230 increase the section modulus of the blade 200 cross-section, thereby reducing operational stresses in the spar foam 204.

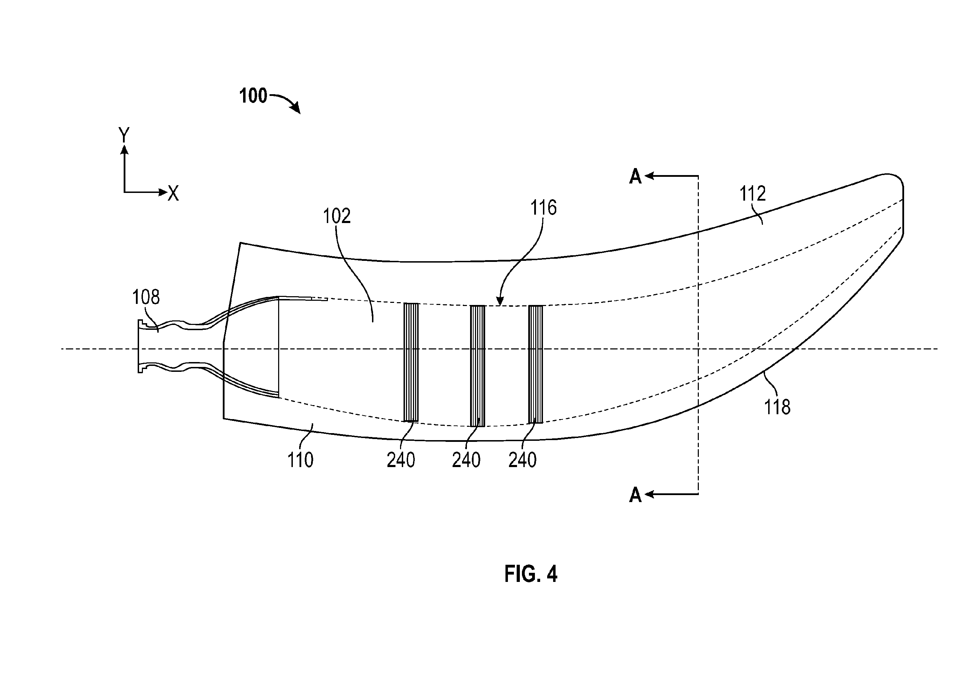

Referring now to FIG. 4, another embodiment is illustrated that includes chord wise fibers 240. The chord wise fibers 240 can be formed in the same manner as described above with respect to the span wise fibers 230. The chord wise fibers 240 increase the stiffness the chord wise direction Y and, as such, reduce or prevent the spar face and camber sides from bulging outward due to secondary bending. This is turn prevents or may reduce other cracking of the spar core. The location of the chord wise fibers 240 as well as their number can be varied as needed.

Both the span wise fibers 230 and chord wise fibers 240 may be may be made of carbon, fiberglass, or other suitable composite material. The added plies may be located along full length of the blade, or their lengths may be optimized to reduce cost and weight. It shall be understood that both span wise fibers 230 and chord wise fibers 240 could be included in a single blade in one embodiment.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A propeller blade (200) comprising:
a foam core (204);
a structural layer (206) formed of multiple layers that surrounds at least a portion of the foam core (204); and
at least one section of fibers (230;240) formed separately from the structural layer (206) located between two of the multiple layers.

2. The propeller blade of claim 1, wherein the fibers are contained in a fabric sheet.

3. The propeller blade of claim 2, wherein the fabric sheet is arranged such that the fibers (230) extend in a span wise direction along the propeller blade (200).

4. The propeller blade of claim 2, wherein the fabric sheet is arranged such that the fibers (240) extend in a chord wise direction along the propeller blade (200).

5. The propeller blade of claim 1 or 2, wherein the at least one section of fibers includes a first section and a second section and wherein the first section is arranged such that the fibers extend in a span wise direction (X) along the propeller blade (200) and the second section is arranged such that the fibers extend in a chord wise direction (Y) along the propeller blade (200).

6. The propeller blade of any preceding claim, further comprising:
a layer of fiberglass at least partially disposed between the foam core (204) and an adhesive layer (205).

7. The propeller blade of any preceding claim, further comprising:
a root (108) disposed within the structural layer (206) at an end of the propeller blade (200).

8. The propeller blade of any preceding claim, wherein the foam core (204) is formed of polyurethane foam, polyisocyanurate foam, or polymethacrylimide foam

9. The propeller blade of claim 1, wherein the structural layer is formed of a resin-impregnated fiber material, for example a resin-impregnated braided carbon fiber sheet.

10. A method of forming a propeller blade (200) comprising:
forming a foam core (204);
disposing a first layer of a structural layer (206) over at least a portion of the foam core (204);
disposing a fabric sheet including directionally oriented fibers over the first layer; and
disposing a second layer of the structural layer (206) over the fabric sheet and the first layer.

11. The method of claim 10, wherein the fabric sheet is disposed such that the fibers extend in the chord wise direction (Y) of the propeller blade (200).

12. The method of claim 10, wherein the fabric sheet is disposed such that the fibers extend in the span wise direction of the propeller blade (200).

13. The method of any one of claims 10, 11 or 12, further comprising:
disposing an additional fabric sheet such that is contained between two layers of the structural layer (206).

14. The method of claim 13, wherein the additional fabric sheet and the fabric sheet are disposed such that the fibers in both extend in the span wise direction (X) of the propeller blade (200).

15. The method of claim 13, wherein the additional fabric sheet and the fabric sheet are disposed such that the fibers of one of them extend in the span wise direction (X) of the propeller blade (200) and the fibers of the other extend in the chord wise direction (Y) of the propeller blade (200).
